# EUROPÄISCHE PATENTSCHRIFT

(11) **EP 3 825 162 B1**
(45) Veröffentlichungstag und Bekanntmachung des Hinweises auf die Patenterteilung: **13.04.2022**
(21) Anmeldenummer: 20194905.4
(22) Anmeldetag: 07.09.2020
(51) Int. Cl.: B60K 35/00, B60K 37/06

(54) **VERFAHREN ZUM BETREIBEN EINES FAHRZEUGINFORMATIONSSYSTEMS UND FAHRZEUGINFORMATIONSSYSTEM**
METHOD FOR OPERATING A VEHICLE INFORMATION SYSTEM AND VEHICLE INFORMATION SYSTEM
PROCÉDÉ DE FONCTIONNEMENT D'UN SYSTÈME D'INFORMATION D'UN VÉHICULE ET SYSTÈME D'INFORMATION DU VÉHICULE

(30) Priorität: 22.11.2019 DE 102019218048
(43) Veröffentlichungstag der Anmeldung: 26.05.2021
(73) Patentinhaber: VOLKSWAGEN AG, 38440 Wolfsburg (DE)
(72) Erfinder: Schmidt, Bastian, 38440 Wolfsburg (DE)

(56) Entgegenhaltungen:
- DE-A1- 19 723 922
- DE-A1-102015 003 498
- DE-A1-102018 207 734

## Beschreibung

Die Erfindung betrifft ein Verfahren zum Betreiben eines Fahrzeuginformationssystems sowie ein Fahrzeuginformationssystem.

Aus der DE 197 23 922 A1 ist eine Signalanzeigevorrichtung für Instrumente in Fahrzeugen bekannt, die einen Fahrer unter Umständen, wo sich eine Konzentration auf vorübergehende und fordernde Aufgaben richtet, von der Präsentation neuer Informationen entlastet. Hierzu wird vorgeschlagen, dass eine Anzahl Sensoren vorgesehen sind, die einen Zustand in einem Fahrzeugsystem detektieren und ein zustandsabhängiges Signal abgeben. Weiter ist eine Signalbehandlungseinheit vorgesehen, an welche die Sensoren direkt oder indirekt angeschlossen sind. Ebenfalls vorgesehen ist eine im Nahbereich des Fahrers angeordnete Präsentationseinheit, die an die Signalbehandlungseinheit angeschlossen ist und in Abhängigkeit von wenigstens einigen von den Sensoren detektierten Zuständen verwendet wird, um dem Fahrer verschiedene Zustände in einem Fahrzeugsystem mitzuteilen, wenn in dem jeweiligen Fahrzeugsystem ein Zustand mit einem vorbestimmten Zustand übereinstimmt. Weiter ist die Signalbehandlungseinheit direkt oder indirekt an eine erste Kategorie Sensoren angeschlossen, die wenigstens eine von einer ersten oder einer zweiten Gruppe Sensoren enthält, in welcher die erste Gruppe Sensoren Signale abgibt, die anzeigen, dass der Fahrer mit einer beanspruchenden, aber vorübergehenden, Fahraufgabe beschäftigt ist. Die zweite Gruppe Sensoren gibt Signale ab, die anzeigen, dass der Fahrer mit dem Einstellen oder Regeln eines Systems beschäftigt ist, das direkt oder indirekt auf die Fahraufgabe bezogen ist. Weiter enthält die Signalbehandlungseinheit Mittel zur Verzögerung der Aktivierung der Präsentation der Anzeigevorrichtungen, wenn wenigstens eines der Signale der ersten Kategorie Sensoren anzeigt, dass der Fahrer mit einer beanspruchten, aber vorübergehenden Fahraufgabe oder mit dem Einstellen oder Regeln eines direkt oder indirekt auf die Fahraufgabe bezogenen Systems beschäftigt ist. Nicht offenbart ist jedoch, dass ein Eingriff eines Fahrerassistenzsystems detektiert wird und Informationen über die Art eines Eingriffs des Fahrerassistenzsystems an den Fahrzeugführer in Abhängigkeit eines Eingriffsstatus ausgegeben werden.

Weiter bekannt ist die DE 10 2015 003 498 A1, die ein Verfahren zum Betrieb eines Fahrerassistenzsystems offenbart, welches Informationen an einen Fahrer ausgibt. Dieses

Verfahren umfasst die Schritte: Ermittlung von Betriebsdaten des Kraftfahrzeugs, die das Vorliegen und/oder Nichtvorliegen einer fahrer- und/oder kraftfahrzeugseitigen Kriteriumsaktion beschreiben, wobei dann bei Vorliegen eines eine auszugebende Information anzeigenden Ausgabesignals und Erfüllung eines das Vorliegen einer Kriteriumsaktion anzeigenden, die Betriebsdaten auswertenden Verzögerungskritieriums eine Verzögerung der Ausgabe der Information um eine Zeitdauer erfolgt. Diese Druckschrift offenbart nicht, dass Informationen über eine Art des Eingriffs eines Fahrerassistenzsystems an den Fahrzeugführer ausgegeben werden.

Aus der DE 10 2018 207 734 A1 ist eine Rückmeldeeinrichtung für ein Kraftfahrzeug bekannt, mit einem Auflagekörper, auf welchem zumindest ein Teilbereich einer Hand eines Insassen des Kraftfahrzeugs ablegbar ist. Der Auflagekörper ist relativ zu einem Unterbau der Rückmeldeeinrichtung bewegbar. Zum Bewegen des Auflagekörpers ist wenigstens ein Aktor vorgesehen. Des Weiteren betrifft die Erfindung ein Kraftfahrzeug mit einer solchen Rückmeldeeinrichtung und ein Verfahren zum Ausgeben einer Rückmeldung an einen Insassen eines Kraftfahrzeugs.

Aus der DE 10 2015 003 498 A1 ist ein Verfahren zum Betrieb wenigstens eines Informationen an einen Fahrer ausgebenden Fahrerassistenzsystems eines Kraftfahrzeugs und ein Kraftfahrzeug mit einem solchen Fahrerassistenzsystem bekannt.

Aus der DE 197 23 922 A1 ist eine Signalanzeigevorrichtung für Instrumente in Fahrzeugen sowie ein Verfahren zur Anzeige von Zuständen in Systemen eines Fahrzeuges bekannt.

Fahrerassistenzfunktionen, die nur in kritischen Situationen warnen oder das Fahrverhalten des Fahrzeugs ändern, werden in der Regel nur selten ausgeführt werden. Somit ist eine solche Warnung oder ein solcher Eingriff einer Fahrerassistenzfunktion für einen Fahrzeugführer schwierig zu erkennen und zu identifizieren und zu bewerten. Zur Verbesserung des Fahrkomforts, einerseits zur besseren Einschätzung, ob ein fehlerhafter oder ein beabsichtigter Eingriff erfolgt ist, und andererseits zur Einstellung von gewünschten Eigenschaften eines Eingriffs, ist es wünschenswert, einem Fahrzeugführer Informationen über den Eingriff des Fahrerassistenzsystems zu geben. Eigenschaften des Eingriffs können die Ausführung des Eingriffs festlegen und z.B. die Zeitdauer betreffen, die zwischen der Feststellung der Notwendigkeit des Eingriffs und der Auslösung des Eingriffs vergeht. Auch kann eine Eigenschaft sein, ob eine Warnung eines Fahrzeugführers erfolgt oder nicht. Selbstverständlich können auch weitere Eigenschaften des Eingriffs eingestellt werden.

Somit stellt sich das technische Problem, ein Verfahren zum Betreiben eines Fahrzeuginformationssystems sowie ein Fahrzeuginformationssystem zu schaffen, welches zur Verbesserung des Fahrkomforts Informationen über einen Eingriff eines Fahrerassistenzsystems an den Fahrzeugführer ausgibt, wobei gleichzeitig eine Betriebssicherheit gewährleistet ist.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zum Betreiben eines Fahrzeuginformationssystems. Dieses dient zur Ausgabe von Informationen an einen Fahrzeugführer und gegebenenfalls weitere Insassen des Fahrzeugs. Weitere Details zum Fahrzeuginformationssystem werden nachfolgend noch näher erläutert.

In dem Verfahren wird detektiert, ob ein Eingriff eines Fahrerassistenzsystems des Fahrzeugs vorliegt. Ein solcher Eingriff kann durch die Durchführung von mindestens einer Fahrerassistenzfunktion erfolgen. Insbesondere kann das Fahrerassistenzsystem Signale zur Unterstützung der Ausführung oder zur Ausführung eines Fahrmanövers des Fahrzeugs erzeugen. Das Fahrmanöver kann hierbei ein assistiertes Fahrmanöver oder ein automatisiertes Fahrmanöver sein, wobei der Begriff automatisiert sowohl ein teilautomatisiertes als auch ein hoch- oder vollautomatisiertes Fahrmanöver sowie ein autonomes Fahrmanöver umfasst.

Der Eingriff kann beispielsweise durch die Anzeige einer Information zum Assistieren bei einem durchzuführenden Fahrmanöver sein, insbesondere wenn das Fahrerassistenzsystem zur Durchführung assistierter Fahrmanöver dient. Eine solche Information kann beispielsweise eine Warnung oder eine Empfehlung für eine Bedienung des Fahrzeugs durch den Fahrzeugführer sein, beispielsweise eine Bremsempfehlung oder eine Lenkempfehlung.

Auch kann der Eingriff ein Erzeugen von Steuersignalen zur Durchführung eines automatisierten Fahrmanövers, beispielsweise eines Ausweichmanövers, eines Brems- und Ausweichmanövers, eines Überholmanövers oder eines weiteren Fahrmanövers, sein, insbesondere wenn das Fahrerassistenzsystem zur Durchführung von automatisierten Fahrmanövern dient.

Ob ein solcher Eingriff vorliegt, kann insbesondere in Abhängigkeit von Ausgangssignalen oder Zustandssignalen detektiert werden, die von dem Fahrerassistenzsystem erzeugt werden. Die Detektion kann hierbei insbesondere durch eine Steuer- und Auswerteeinrichtung des Fahrzeuginformationssystems erfolgen.

Weiter wird ein Maß für eine Aufnahmefähigkeit eines Fahrzeugführers bestimmt. Dieses Maß kann insbesondere in Abhängigkeit von einer Fahrzeuginformation bestimmt werden, wobei eine Fahrzeuginformation z.B. eine Fahrzeugposition, eine Fahrzeuggeschwindigkeit, eine Fahrzeugbeschleunigung oder eine weitere fahrzeugbezogene, insbesondere eine fahrzeugdynamikbezogene, Größe sein kann. Es ist z.B. möglich, dass das Maß für die Aufnahmefähigkeit in Abhängigkeit einer aktuellen Fahrsituation bestimmt wird, wobei diese Fahrsituation z.B. in Abhängigkeit der erläuterten Fahrzeuginformation bestimmt wird. Z.B. kann als Fahrsituation ein Stillstand des Fahrzeugs detektiert werden, falls eine Fahrzeuggeschwindigkeit Null ist.

Auch kann als Fahrsituation ein Parkzustand des Fahrzeugs detektiert werden, falls eine Antriebsmaschine des Fahrzeugs ausgeschaltet ist.

Hierbei kann die Fahrzeuginformation und oder die Fahrsituation bestimmt oder erfasst werden, beispielsweise durch eine geeignete Einrichtung zur Erfassung, die insbesondere als Sensor ausgebildet sein kann. Die Bestimmung des Maßes für die Aufnahmefähigkeit kann insbesondere ebenfalls durch die Steuer- und Auswerteeinrichtung des Fahrzeuginformationssystems erfolgen.

So kann eine Fahrsituation z.B. auch aufgrund von Umgebungsinformationen bestimmt werden. Umgebungsinformationen können z.B. in Abhängigkeit von Ausgangssignalen von mindestens einer Einrichtung zur Erfassung von Umgebungsinformationen bestimmt werden. Eine solche Einrichtung kann z.B. eine Bilderfassungseinrichtung, ein Radarsensor oder ein Ultraschallsensor sein. So kann z.B. als Fahrsituation eine Situation detektiert, in der weniger als eine vorbestimmte (geringe) Anzahl von weiteren Fahrzeugen in einer Umgebung des Fahrzeugs vorhanden sind. Auch kann als Fahrsituation eine Folgefahrt mit einer geringen Relativgeschwindigkeit zwischen dem Fahrzeug und dem vorausfahrenden Fahrzeug sowie einem ausreichenden Abstand zwischen den Fahrzeugen detektiert werden. Beiden vorgenannten Fahrsituationen kann z.B. ein hohes Maß an Aufnahmefähigkeit zugeordnet sein. Das Maß für die Aufnahmefähigkeit kann hierbei mindestens zwei voneinander verschiedene Grade der Aufnahmefähigkeit repräsentieren, z.B. einen ersten Grad "nicht aufnahmefähig" und einen weiteren Grad "aufnahmefähig". Selbstverständlich kann das Maß auch mehr als zwei voneinander verschiedene Grade der Aufnahmefähigkeit repräsentieren. Vorstellbar ist, dass das Maß als numerischer Wert bestimmt wird, wobei ein ansteigender Wert einen ansteigenden Grad an Aufnahmefähigkeit repräsentiert. Selbstverständlich ist es jedoch auch vorstellbar, dass andere Maße bzw. Repräsentationen gewählt werden.

Erfindungsgemäß wird zumindest eine Information über die Art des Eingriffs an den Fahrzeugführer ausgegeben, falls der Eingriff abgeschlossen und das Maß für die Aufnahmefähigkeit ein aufnahmefähigkeitsspezifisches Kriterium erfüllt.

Die Information über die Art des Eingriffs kann insbesondere eine Information über die Bezeichnung des Eingriffs sein. Diese kann z.B. in alphanumerischer Art und Weise, aber auch als grafisches Symbol, ausgegeben werden.

Die Ausgabe kann hierbei durch das Fahrzeuginformationssystem gesteuert werden. Die Ausgabe kann über eine geeignete Ausgabeeinrichtung erfolgen, die insbesondere im Fahrzeug angeordnet und Teil des Fahrzeuginformationssystems sein kann. Die Ausgabeeinrichtung kann beispielsweise eine Anzeigeeinrichtung zur Ausgabe von visuell bzw. optisch erfassbaren Informationen sein. Eine solche Anzeigeeinrichtung kann beispielsweise eine Anzeigeeinrichtung eines im Fahrzeug angeordneten Kombiinstruments sein. Auch kann die Anzeigeeinrichtung ein sogenanntes Head-up-Display sein. Selbstverständlich ist es auch vorstellbar, die Informationen in akustisch erfassbarer Weise auszugeben, beispielsweise über einen Lautsprecher. Ebenfalls ist es vorstellbar, die Informationen in haptisch erfassbarer Weise auszugeben, beispielsweise über ein durch das Lenkrad erzeugtes Ausgabesignal. Auch weitere Formen der Informationsausgabe sind selbstverständlich vorstellbar.

So kann beispielsweise eine Ausgabe auch auf einem Endgerät, insbesondere durch eine Ausgabeeinrichtung des Endgeräts wie z.B. ein Display, erfolgen, welches nicht fest im Fahrzeug verbaut ist, z.B. auf einem portablen Endgerät wie z.B. einem Mobiltelefon oder einem Tablet-PC. Hierzu kann es erforderlich sein, die entsprechenden Informationen an das Endgerät zu übertragen und die Ausgabeeinrichtung des Endgeräts entsprechend zu steuern. Das Fahrzeug kann hierzu geeignete Mittel aufweisen. So ist es z.B. vorstellbar, entsprechende Informationen im Rahmen der Ausführung einer Anwendung ("App") auf dem Endgerät auszugeben.

Dass der Eingriff abgeschlossen ist, kann insbesondere wie vorhergehend erläutert in Abhängigkeit der Ausgangssignale des den Eingriff durchführenden Fahrerassistenzsystems oder eines entsprechenden Zustandssignals detektiert werden. Hierbei kann das durchführende Fahrerassistenzsystem ein entsprechendes Zustandssignal erzeugen, welches z.B. repräsentiert, ob der Eingriff durchgeführt wird oder ob kein Eingriff durchgeführt wird oder ob ein Eingriff abgeschlossen ist.

Dass das Maß für die Aufnahmefähigkeit das aufnahmefähigkeitsspezifische Kriterium erfüllt, kann ebenfalls durch das Fahrzeuginformationssystem, insbesondere dessen Steuer- und Auswerteeinrichtung, detektiert werden. Hierzu kann das aufnahmefähigkeitsspezifische Kriterium in Abhängigkeit des bestimmten Maßes ausgewertet werden. Insbesondere kann das Kriterium erfüllt sein, wenn der Grad der Aufmerksamkeit größer als ein vorbestimmtes Maß ist. Wird dieser Grad durch einen Wert repräsentiert, der mit steigendem Grad der Aufmerksamkeit zunimmt, so kann das aufnahmefähigkeitsspezifische Kriterium beispielsweise erfüllt sein, wenn der Wert größer als ein vorbestimmter Schwellwert ist. Auch kann das aufnahmefähigkeitsspezifische Kriterium erfüllt sein, falls der detektierte oder identifizierte Grad der Aufnahmefähigkeit einem vorbestimmten Grad entspricht.

Das Verfahren ermöglicht in vorteilhafter Weise, dass Informationen über die Art des Eingriffs nicht dann ausgegeben werden, wenn der Eingriff gerade erfolgt. Da angenommen werden kann, dass der Fahrzeugführer während des Eingriffs sich nicht oder nicht in ausreichender Art und Weise auf die Ausgabe der Informationen konzentrieren kann, wird hierdurch in vorteilhafter Weise sichergestellt, dass das Risiko einer solchen Nichtwahrnehmung reduziert wird. Weiter ermöglicht das Verfahren in vorteilhafter Weise, dass die Information nach dem Eingriff erst dann ausgegeben wird, falls ein entsprechendes Maß für die Aufnahmefähigkeit vorliegt. Hierdurch wird in vorteilhafter Weise das Risiko der Nichtwahrnehmung weiter reduziert. Mit anderen Worten ergibt sich also in vorteilhafter Weise, dass der Fahrzeugführer zuverlässiger über die Art des Eingriffs informiert wird und somit auch Informationen bezüglich ihm nicht oder wenig bekannter Fahrzeugfunktionen in zuverlässiger Art und Weise erhält, wodurch einerseits ein Fahrtkomfort beim Führen des Fahrzeugs verbessert und andererseits auch eine Betriebssicherheit erhöht wird, da der Fahrer durch eine unpassende Ausgabe der Informationen nicht abgelenkt wird.

In einer weiteren Ausführungsform wird ein Maß für die Berechtigung des Eingriffs bestimmt. Die ausgegebene Information, insbesondere der Inhalt und/oder der Umfang der Information, wird dann in Abhängigkeit des Maßes der Berechtigung bestimmt. Das Maß für die Berechtigung des Eingriffs kann repräsentieren, ob der erfolgte Eingriff des durchführenden Fahrerassistenzsystems notwendig war oder nicht. Entsprechend dem Maß für die Aufnahmefähigkeit kann das Maß für die Berechtigung beispielsweise als Grad der Berechtigung repräsentiert werden, wobei ein Grad "berechtigt" und ein weiterer Grad "nicht berechtigt" sein kann. Auch kann das Maß als numerischer Wert bestimmt werden, wobei ein ansteigender Wert einen ansteigenden Grad an Berechtigung repräsentiert.

Dann kann der Eingriff als berechtigt klassifiziert werden, wenn das derart bestimmte Maß einem vorbestimmten Grad, insbesondere dem Grad "berechtigt", entspricht oder größer als ein vorbestimmter Schwellwert ist.

Wie nachfolgend noch näher erläutert, kann das Maß für die Berechtigung des Eingriffs insbesondere in Abhängigkeit eines Verhaltens des Fahrzeugführers während des Eingriffs bestimmt werden. Alternativ oder kumulativ kann das Maß für die Berechtigung auch in Abhängigkeit der vorhergehend erläuterten Fahrzeuginformationen bestimmt werden. Wird beispielsweise vor oder während des Eingriffs des durchführenden Fahrerassistenzsystems ein Sollwert oder ein Sollwertbereich für fahrzeugbezogene Größen, insbesondere fahrdynamikbezogene Größen, bestimmt, so kann der Eingriff als berechtigt klassifiziert werden, wenn die sich während des Eingriffs einstellenden Ist-Werte dieser Größen nicht mehr als ein vorbestimmtes Maß von dem Sollwert abweichen oder in dem Sollwertbereich liegen. Dann kann davon ausgegangen werden, dass der Fahrzeugführer das Fahrzeug entsprechend dem empfohlenen Eingriff bedient hat oder ein automatisiert durchgeführtes Fahrmanöver nicht durch eigene Eingaben übersteuert hat.

Insbesondere kann der Umfang und/oder der Inhalt der ausgegebenen Information im Falle eines als unberechtigt klassifizierten Eingriffs von dem Inhalt und/oder dem Umfang der Information bei einem als berechtigt klassifizierten Eingriff verschieden sein. Insbesondere können im Fall eines als nicht berechtigt klassifizierten Eingriffs zusätzlich zu einer Information über die Art des Eingriffs weitere Informationen ausgegeben werden, wobei im Falle des als berechtigt klassifizierten Eingriffs zusätzlich zu der Information über die Art des Eingriffs keine weiteren Informationen ausgegeben werden.

Hierdurch wird in vorteilhafter Weise ein Fahrkomfort beim Bedienen des Fahrzeugs weiter verbessert, da davon ausgegangen werden kann, dass ein unberechtigter Eingriff beim Fahrzeugführer Irritationen erzeugen wird und daher im Vergleich zu einem berechtigten Eingriff ein Mehrbedarf an Informationen besteht, beispielsweise an Bedarf an Informationen über die Ursache des Eingriffs und/oder über die Funktionsweise des Eingriffs.

In einer weiteren Ausführungsform wird das Maß für die Berechtigung des Eingriffs in Abhängigkeit eines Verhaltens des Fahrzeugführers bestimmt. Besteht der Eingriff beispielsweise in der Ausgabe von Informationen zum Assistieren bei der Fahrzeugführung, so kann bestimmt werden, ob der Fahrzeugführer dem empfohlenen Verhalten, beispielsweise einer empfohlen Bedientätigkeit, folgt oder mehr als ein vorbestimmtes Maß davon abweicht. Eine Bedientätigkeit kann beispielsweise eine Betätigung einer Lenkhandhabe, beispielsweise eines Lenkrads, des Fahrzeugs oder eine Betätigung einer Bremseinrichtung, beispielsweise eines Bremspedals, des Fahrzeugs oder eine Betätigung einer Beschleunigungseinrichtung, z.B. eines Gaspedals, des Fahrzeugs sein. Auch kann das Verhalten des Fahrzeugführers in Abhängigkeit der sich einstellenden Ist-Werte oder eines zeitlichen Verlaufs der Ist-Werte von Fahrzeuggrößen bestimmt werden, wobei der Fahrzeugführer dem empfohlenen Verhalten, beispielsweise einer empfohlen Bedientätigkeit, folgt, wenn die Ist-Werte bzw. deren zeitlicher Verlauf nicht mehr als ein vorbestimmtes Maß von vorbestimmten Sollwerten bzw. einem Sollwert-Verlauf abweichen, und dem empfohlenen Verhalten nicht folgt, wenn die Ist-Werte bzw. deren zeitlicher Verlauf mehr als ein vorbestimmtes Maß von vorbestimmten Sollwerten bzw. einem Sollwert-Verlauf abweichen.

Das Verhalten des Fahrzeugführers kann hierbei bestimmt werden, beispielsweise durch Bestimmen oder Erfassen der Bedientätigkeit, wobei insbesondere Ausgangssignale von entsprechenden Erfassungseinrichtungen, beispielsweise einem Lenkwinkelsensor, einem Bremsbetätigungssensor oder einem Gaspedalbetätigungssensor ausgewertet werden können.

Entspricht das Verhalten des Fahrzeugführers dem durch den Eingriff ausgegebenen Informationen zum empfohlenen Verhalten, so kann der Eingriff als berechtigt klassifiziert werden.

Weicht jedoch das Verhalten des Fahrzeugführers um mehr als ein vorbestimmtes Maß von diesem empfohlenen Verhalten ab, so kann der Eingriff als nicht berechtigt klassifiziert werden.

Erfolgt durch den Eingriff die Durchführung eines automatisierten Fahrmanövers, so kann detektiert werden, ob der Fahrzeugführer durch sein Verhalten den Eingriff übersteuert. Dies kann insbesondere detektiert werden, wenn der Fahrzeugführer trotz der automatisierten Durchführung eine Bedientätigkeit durchführt, beispielsweise die Lenkhandhabe, die Bremseinrichtung und/oder die Beschleunigungseinrichtung betätigt, insbesondere mehr als ein vorbestimmtes Maß. In diesem Fall kann der Eingriff als nicht berechtigt klassifiziert werden. Übersteuert der Fahrzeugführer den Eingriff nicht, beispielsweise indem er keine Bedientätigkeit vornimmt, die größer als ein vorbestimmtes Maß ist, so kann der Eingriff als berechtigt klassifiziert werden.

Hierdurch ergibt sich in vorteilhafter Weise eine fahrzeugführerspezifische Verbesserung des Fahrkomforts, da die Berechtigung des Eingriffs und somit die Ausgabe der Information fahrzeugführerspezifisch bestimmt werden kann. Somit kann also eine individuelle Anpassung des Fahrkomforts erreicht werden.

In einer weiteren Ausführungsform wird das Verhalten des Fahrzeugführers in Abhängigkeit von Eingaben des Fahrzeugführers bestimmt. Dies und entsprechende Vorteile wurden vorhergehend erläutert.

Eine Eingabe des Fahrzeugführers kann insbesondere durch Betätigung einer Eingabeeinrichtung zur Erzeugung von Steuersignalen zur Steuerung des Fahrverhaltens des Fahrzeugs erfolgen. Eine solche Eingabe kann durch entsprechende Bestimmungseinrichtungen bestimmt werden.

Allerdings ist es auch vorstellbar, das Verhalten des Fahrzeugführers in anderer Art und Weise, also unabhängig von Eingaben des Fahrzeugführers, zu bestimmen. Beispielsweise kann der Fahrzeugführer optisch erfasst werden, beispielsweise durch eine entsprechende Bilderfassungseinrichtung. Weiter kann dann das Verhalten des Fahrzeugführers bildbasiert bestimmt werden, wobei entsprechende Bildauswerteverfahren dem Fachmann bekannt sind. Durch Auswertung dieses bildbasiert bestimmten Verhaltens kann dann klassifiziert werden, ob der Eingriff als berechtigt oder als nicht berechtigt empfunden wurde.

Selbstverständlich können auch weitere Informationen über den Fahrzeugführer bestimmt werden, beispielsweise physiologische Informationen, wobei dann in Abhängigkeit dieser Informationen die Klassifizierung erfolgt.

In einer weiteren Ausführungsform wird alternativ oder kumulativ das Maß für die Berechtigung des Eingriffs in Abhängigkeit eines Verhaltens des Fahrzeugs bestimmt. Das Fahrzeugverhalten kann beispielsweise in Abhängigkeit mindestens einer der vorhergehend erläuterten Fahrzeuginformationen bestimmt werden. Beispielsweise kann das Verhalten des Fahrzeugs als Wert oder zeitlicher Verlauf eines Werts der mindestens einen Fahrzeuginformation bestimmt werden. Weiter kann der Eingriff als nicht berechtigt klassifiziert werden, wenn dieser Ist-Wert oder dieser Ist-Wert-Verlauf um mehr als ein vorbestimmtes Maß von einem vorab bestimmten Sollwert oder Sollwert-Verlauf abweicht. Entsprechend kann der Eingriff als berechtigt klassifiziert werden, wenn der Ist-Wert oder der Ist-Wert-Verlauf nicht mehr als ein vorbestimmtes Maß von dem Sollwert bzw. dem Sollwert-Verlauf abweicht. Der Sollwert oder der Sollwert-Verlauf kann hierbei insbesondere durch das durchführende Fahrerassistenzsystem bestimmt werden. Hierdurch ergibt sich in vorteilhafter Weise eine zuverlässige Bestimmung des Maßes für die Berechtigung.

In einer weiteren Ausführungsform werden Informationen über eine Funktionsweise des Eingriffs ausgegeben, falls der Eingriff als unberechtigt klassifiziert wurde.

Die Information über die Funktionsweise kann beispielsweise Informationen über die Ursache des Eingriffs umfassen, beispielsweise, dass eine Kollisionsgefahr detektiert wurde. Alternativ oder kumulativ kann die Information über die Funktionsweise eine Information über die während des Eingriffs veränderten fahrdynamischen Größen umfassen, beispielsweise die Information, dass eine Geschwindigkeit des Fahrzeugs verändert wurde und/oder die Information, dass eine Fahrtrichtung des Fahrzeugs verändert wurde. Weiter alternativ oder kumulativ kann die Information über die Funktionsweise die Art der Änderung der fahrdynamischen Größe umfassen, beispielsweise ob eine Geschwindigkeit erhöht oder verringert wurde und/oder in welche Richtung des Fahrzeugs geändert wurde.

Hierdurch ergibt sich in vorteilhafter Weise eine verbesserte Bedienbarkeit des Fahrzeugs mit dem durchführenden Fahrerassistenzsystem, da der Fahrer nach Durchführung des Eingriffs durch die entsprechende Informationsausgabe bei einem als nicht berechtigt klassifizierten Eingriff bewerten kann, ob der Eingriff tatsächlich berechtigt war oder nicht. Insbesondere kann der Fahrzeugführer aufgrund der ausgegebenen Informationen in eine Lage versetzt werden, den erfolgten Eingriff nachzuvollziehen, was zu einer Neubewertung führen kann. Kommt der Fahrzeugführer beispielsweise zu dem Ergebnis, dass ein als nicht berechtigt klassifizierter Eingriff tatsächlich doch berechtigt war, so ergibt sich für ihn keine Notwendigkeit zur Vornahme von Änderungen des Fahrverhaltens, beispielsweise durch Einstellung von Betriebsparametern eines Fahrerassistenzsystems und/oder die Aktivierung bzw. Deaktivierung von Funktionen eines Fahrerassistenzsystems.

Weiter wird das Risiko reduziert, dass der Fahrer eine Reparaturbedürftigkeit des Fahrzeugs feststellt. Ebenfalls kann in vorteilhafter Weise erreicht werden, dass der Fahrzeugführer bei dem nächsten Eingriff aufgrund der Neubewertung den Eingriff als berechtigt klassifizieren wird, wodurch dann weniger Irritationen beim Fahrzeugführer ausgelöst werden und/oder weniger Informationen ausgegeben werden müssen.

In einer weiteren Ausführungsform werden Informationen über eine Konfigurationsmöglichkeit des Eingriffs ausgegeben, falls der Eingriff als unberechtigt klassifiziert wurde. Beispielsweise kann eine Information über die einstellbaren Betriebsparameter des Fahrerassistenzsystems ausgegeben werden, die zur Durchführung des Eingriffs genutzt werden. Weiter kann eine Information über die Möglichkeit der Änderung dieser Betriebsparameter ausgegeben werden. Weiter kann eine Information über eine Auswirkung einer entsprechenden Änderung ausgegeben werden. Auch kann eine Information über einen Aktivierungszustand des Eingriffs und/oder über eine Möglichkeit der Änderung dieses Aktivierungszustands ausgegeben werden. Die Informationen können beispielsweise in alphanumerischer Art und Weise oder in grafischer Art und Weise, beispielsweise durch Anzeige eines entsprechenden Symbols, ausgegeben werden.

Hierdurch erhöht sich wiederum in vorteilhafter Weise ein Bedienkomfort sowie ein Fahrkomfort beim Führen des Fahrzeugs, da dem Fahrzeugführer ermöglicht wird, zielgerichtet und somit zeitlich schnell einen Eingriff derart anzupassen, dass dieser zu einem gewünschten Fahrzeugverhalten führt, wodurch der Eingriff dann bei der nächsten Durchführung als berechtigter Eingriff klassifiziert wird. Hierdurch reduziert sich wiederum in vorteilhafter Weise auch der Umfang an Informationen, die beim nächsten Eingriff ausgegeben werden.

In einer weiteren Ausführungsform werden Informationen über einen Zugang zu einer eingriffsspezifischen Konfigurationsmöglichkeit ausgegeben, falls der Eingriff als unberechtigt klassifiziert wurde. Die Informationen über den Zugang kann beispielsweise in Form eines Hyperlinks ausgegeben werden, wobei dieser beispielsweise in alphanumerischer Art und Weise oder in grafischer Art und Weise, beispielsweise durch Anzeige eines entsprechenden Symbols, ausgegeben wird. Alternativ oder kumulativ können Informationen über eine Bedienung einer entsprechenden Eingabeeinrichtung ausgegeben werden, die die Konfiguration des Eingriffs ermöglichen, beispielsweise in Form einer Menüführung.

Hierdurch ergibt sich in vorteilhafter Weise eine verbesserte Bedienbarkeit für den Fahrzeugführer, da er gezielt und somit zeitlich schnell das Verhalten eines als unberechtigt empfundenen Eingriffs ändern kann.

Weiter vorgeschlagen wird ein Fahrzeuginformationssystem eines Fahrzeugs, wobei das Fahrzeuginformationssystem mindestens eine erste Einrichtung zur Ausgabe von Informationen an einen Fahrzeugführer und mindestens eine Steuer- und Auswerteeinrichtung umfasst. Die Steuer- und Auswerteeinrichtung kann als Mikrocontroller oder integrierte Schaltung ausgebildet sein oder eine(n) solche(n) umfassen. Weiter wird mittels der Steuer- und Auswerteeinrichtung detektiert, ob ein Eingriff eines Fahrerassistenzsystems des Fahrzeugs vorliegt. Weiter wird mittels der Steuer- und Auswerteeinrichtung ein Maß für eine Aufnahmefähigkeit des Fahrzeugführers bestimmt.

Erfindungsgemäß wird zumindest eine Information über die Art des Eingriffs an den Fahrzeugführer durch die Einrichtung zur Ausgabe von Informationen ausgegeben, falls der Eingriff abgeschlossen und das Maß für die Aufnahmefähigkeit ein aufnahmefähigkeitsspezifisches Kriterium erfüllt.

Das vorgeschlagene Fahrzeuginformationssystem ermöglicht in vorteilhafter Weise die Durchführung eines Verfahrens zum Betreiben dieses Fahrzeuginformationssystems gemäß einer der in dieser Offenbarung beschriebenen erfindungsgemäßen Ausführungsformen. Somit ist also das Fahrzeuginformationssystem konfiguriert, um ein solches Verfahren ausführen zu können.

In einer weiteren Ausführungsform umfasst das Fahrzeuginformationssystem mindestens eine weitere Einrichtung zur Ausgabe von Informationen, wobei die Information über die Art des Eingriffs an den Fahrzeugführer zusätzlich auch durch die weitere Einrichtung zur Ausgabe von Informationen ausgegeben wird.

Erfolgt z.B. die Informationsausgabe über die erste Einrichtung zur Ausgabe von Informationen in optischer Art und Weise, so kann die weitere Einrichtung zur Ausgabe von Informationen beispielsweise zur akustischen und/oder haptischen Informationsausgabe dienen.

Weiter ist es möglich, dass die weitere Einrichtung zur Ausgabe von Informationen mindestens eine Kommunikationseinrichtung umfasst, die die entsprechenden Informationen an ein Endgerät eines Nutzers, beispielsweise des Fahrzeugführers, übertragen kann, wobei dann die Ausgabe durch eine Ausgabeeinrichtung des Endgeräts, insbesondere eine Ausgabeeinrichtung zur Ausgabe von visuell erfassbaren und/oder akustisch erfassbaren Informationen, erfolgt. Das Endgerät kann z.B. ein Mobilfunktelefon oder ein Tablet-PC oder ein weiteres Endgerät sein.

Selbstverständlich kann die weitere Einrichtung zur Ausgabe von Informationen jedoch auch die Informationen in gleicher Art und Weise ausgeben wie die erste Einrichtung zur Ausgabe von Informationen. Dies ermöglicht beispielsweise, dass Informationen in der Anzeigeeinrichtung des Kombiinstruments als auch im Head-up-Display dargestellt werden können. Hierdurch wird in vorteilhafter Weise die Wahrscheinlichkeit der Informationsaufnahme durch den Fahrzeugführer verbessert.

Die Erfindung wird anhand von Ausführungsbeispielen näher erläutert. Die Figuren zeigen:
- Fig. 1: ein schematisches Blockschaltbild eines Fahrzeugführers und einer Anzeigeeinrichtung während der Durchführung eines Eingriffs,
- Fig. 2: ein schematisches Blockschaltbild eines Fahrzeugführers und Ausgabeeinrichtungen nach der Beendigung des Eingriffs und
- Fig. 3: ein schematisches Blockschaltbild eines erfindungsgemäßen Verfahrens.

Nachfolgend bezeichnen gleiche Bezugszeichen Elemente mit gleichen oder ähnlichen technischen Merkmalen.

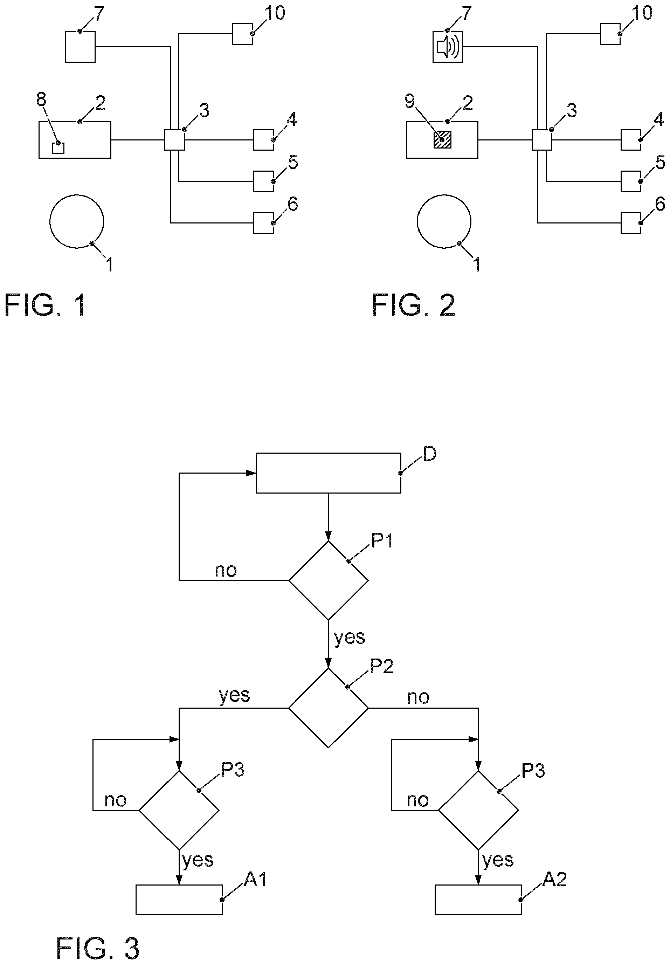

Fig. 1 zeigt ein schematisches Blockschaltbild eines Fahrzeugführers 1 und einer ersten Ausgabeeinrichtung 2 zur Ausgabe von Informationen. Diese erste Ausgabeeinrichtung 2 ist als Anzeigeeinrichtung zur Anzeige von visuell durch den Fahrzeugführer 1 erfassbaren Informationen ausgebildet. In Fig. 1 ist ein Zustand der ersten Ausgabeeinrichtung 2 während der Durchführung eines Eingriffs eines Fahrerassistenzsystems eines Fahrzeugs (nicht dargestellt) dargestellt. Ein Fahrzeuginformationssystem umfasst hierbei die erste Ausgabeeinrichtung 2 und eine Steuer- und Auswerteeinrichtung 3. Die Steuer- und Auswerteeinrichtung 3 ist hierbei signal- und/oder datentechnisch mit der ersten Ausgabeeinrichtung 2 verbunden.

Durch die Steuer- und Auswerteeinrichtung 3 wird detektiert, dass ein Eingriff des Fahrerassistenzsystems, welches auch als durchführendes Fahrerassistenzsystem bezeichnet werden kann, vorliegt. Hierzu kann die Steuer- und Auswerteeinrichtung 3 mit einer weiteren Steuer- und Auswerteeinrichtung 6 des Fahrerassistenzsystems signal- und/oder datentechnisch verbunden sein, welches den Eingriff durchführen kann. In Abhängigkeit der von der weiteren Steuer- und Auswerteeinrichtung 6 an die Steuer- und Auswerteeinrichtung 3 des Fahrzeuginformationssystems übertragenen Informationen kann diese z.B. detektieren, ob der Eingriff andauert oder abgeschlossen ist. In dem in Fig. 1 dargestellten Zustand detektiert die Steuer- und Auswerteeinrichtung 3, dass ein Eingriff durch das durchführende Fahrerassistenzsystem nicht abgeschlossen ist. In diesem Fall steuert die Steuer- und Auswerteeinrichtung 3 die erste Ausgabeeinrichtung 2 derart an, dass ein Warnsymbol 8 visuell erfassbar dargestellt wird, welches z.B. als Warnung vor einer Kollisionsgefahr interpretiert werden kann. Dieses Warnsymbol 8 stellt hierbei keine Information über die Art des Eingriffs dar, sondern repräsentiert eine vorliegende Betriebssituation des Fahrzeugs. Alternativ oder kumulativ kann eine Handlungsaufforderung für den Fahrzeugführer, z.B. zum Lenken oder Bremsen, dargestellt werden, entweder durch eine Beschreibung oder ein entsprechendes Symbol. Diese Beschreibung oder dieses Symbol kann funktionsspezifisch sein, d.h. dass für verschiedene ausgeführte Funktionen verschiedene Beschreibungen oder Symbole dargestellt werden.

Weiter in Fig. 1 dargestellt sind ein Geschwindigkeitssensor 4, eine Motorsteuereinrichtung 5, eine weitere Ausgabeeinrichtung 7 sowie eine Eingabeeinrichtung 10, die in Bezug auf Fig. 2 näher erläutert werden.

Fig. 2 ein schematisches Blockschaltbild eines Fahrzeugführers 1 und eines Fahrerassistenzsystems nach dem Abschluss des Eingriffs. Wird durch die Steuer- und Auswerteeinrichtung 3 detektiert, dass der Eingriff abgeschlossen ist, so kann durch die Steuer- und Auswerteeinrichtung 3 ein Maß für die Aufnahmefähigkeit des Fahrzeugführers 1 bestimmt und ein aufnahmefähigkeitsspezifisches Kriterium ausgewertet werden. Hierzu kann die Steuer- und Auswerteeinrichtung 3 mit einem Geschwindigkeitssensor 4 des Fahrzeugs signal- und/oder datentechnisch verbunden sein. Weiter kann die Steuer- und Auswerteeinrichtung 3 mit einer Motorsteuereinrichtung 5 signal- und/oder datentechnisch verbunden sein. In Abhängigkeit von durch den Geschwindigkeitssensor 4 an die Steuer- und Auswerteeinrichtung 3 übertragenen Geschwindigkeitsinformationen kann diese detektieren, ob das Fahrzeug steht oder sich langsamer als ein vorbestimmter Geschwindigkeitswert bewegt. Weiter kann die Steuer- und Auswerteeinrichtung 3 in Abhängigkeit von durch die Motorsteuereinrichtung 5 übertragenen Signalen detektieren, ob eine Antriebseinrichtung des Fahrzeugs betrieben wird oder ausgeschaltet ist. und erfüllt gleichzeitig das Maß für die Aufnahmefähigkeit des Fahrzeugführers 1 ein aufnahmefähigkeitsspezifisches Kriterium, so kann die Steuer- und Auswerteeinrichtung 3 die erste Anzeigeeinrichtung insbesondere derart ansteuern, dass eine Information über die Art des Eingriffs an den Fahrzeugführer ausgegeben wird.

Das aufnahmefähigkeitsspezifische Kriterium kann beispielsweise erfüllt sein, falls die vom Geschwindigkeitssensor 4 übermittelte Fahrzeuggeschwindigkeit kleiner als ein vorbestimmter Schwellwert ist und/oder der Motor des Fahrzeugs ausgeschaltet ist, was in Abhängigkeit der von der Motorsteuereinrichtung 5 übermittelten Informationen durch die Steuer- und Auswerteeinrichtung 3 detektiert werden kann.

In diesem Fall steuert die Steuer- und Auswerteeinrichtung 3 die Ausgabeeinrichtung 2 derart an, dass zumindest eine Information 9 über die Art des Eingriffs an den Fahrzeugführer 1 ausgegeben wird, beispielsweise eine Bezeichnung des durchgeführten Eingriffs, beispielsweise die Bezeichnung "automatisches Bremsmanöver". Die Informationen 9 über die Art des Eingriffs sind hierbei als schraffierter Bereich dargestellt und sind von den Informationen des Warnsymbols verschieden.

Weiter kann die Steuer- und Auswerteeinrichtung 3 auch eine weitere Ausgabeeinrichtung 7 zur Ausgabe von akustisch erfassbaren Informationen, die insbesondere einen Lautsprecher umfassen kann, ansteuern, sodass die Information über die Art des Eingriffs an den Fahrzeugführer 1 auch in akustisch erfassbarer Weise ausgegeben wird. Dies ist jedoch nicht zwingend. Selbstverständlich ist es alternativ oder kumulativ zur Ausgabe von akustisch erfassbaren Informationen auch möglich, dass durch die Steuer- und Auswerteeinrichtung 3 eine weitere Ausgabeeinrichtung zur Ausgabe von visuell durch den Fahrzeugführer erfassbaren Informationen derart angesteuert wird, dass diese die Information 9 über die Art des Eingriffs an den Fahrzeugführer 1 ausgibt, wobei diese weitere Ausgabeeinrichtung räumlich versetzt zur ersten Ausgabeeinrichtung 2 angeordnet sein kann. Beispielsweise kann die erste Ausgabeeinrichtung 2 Teil eines Mittendisplays des Fahrzeugs sein, wobei die erläuterte weitere Ausgabeeinrichtung zur Ausgabe von visuell durch den Fahrzeugführer erfassbaren Informationen Teil eines Kombiinstruments und/oder Teil eines Head-up-Displays des Fahrzeugs sein kann.

Weiter dargestellt ist, dass die Steuer- und Auswerteeinrichtung 3 mit einer Eingabeeinrichtung 10 signal- und/oder datentechnisch verbunden ist, die zur Eingabe von Fahrerwünschen dem Fahrzeugführer 1 dient. Diese Eingabeeinrichtung kann beispielsweise eine Lenkhandhabe und/oder eine Bremseinrichtung des Fahrzeugs sein.

Somit können durch die Steuer- und Auswerteeinrichtung 3 die Eingaben des Fahrzeugführers erfasst und ausgewertet werden, wobei insbesondere durch die Auswertung der Eingaben bestimmt werden kann, ob der Eingriff durch den Fahrzeugführer als "berechtigt" oder als nicht berechtigt empfunden und entsprechend klassifiziert wird.

In Abhängigkeit dieser Klassifizierung kann dann die ausgegebene Information bestimmt werden, insbesondere ein Inhalt und/oder ein Umfang der ausgegebenen Informationen 9.

Alternativ oder kumulativ kann durch die Steuer- und Auswerteeinrichtung 3 in Abhängigkeit eines Fahrzeugverhaltens bestimmt werden, ob der Eingriff als berechtigt oder nicht berechtigt klassifiziert wird.

Das Fahrzeugverhalten kann insbesondere in Abhängigkeit von Ist-Werten oder eines zeitlichen Verlaufs der Ist-Werte von fahrdynamikbezogenen Größen, beispielsweise durch den Geschwindigkeitssensor 4 erfassten Fahrzeuggeschwindigkeit, bestimmt werden.

Wird der Eingriff als unberechtigt klassifiziert, so kann durch die Steuer- und Auswerteeinrichtung 3 die erste Ausgabeeinrichtung 2 insbesondere derart gesteuert werden, dass die ausgegebenen Informationen 9 auch Informationen über eine Funktionsweise des Eingriffs und/oder Informationen über eine Konfigurationsmöglichkeit des Eingriffs und/oder Informationen über einen Zugang zu einer eingriffsspezifischen Konfigurationsmöglichkeit umfassen.

Fig. 3 zeigt ein schematisches Flussdiagramm eines erfindungsgemäßen Verfahrens.

Dargestellt ist die Durchführung D eines Eingriffs eines Fahrerassistenzsystems eines Fahrzeugs, wobei beispielhafte Eingriffe vorhergehend erläutert wurden. Während des Durchführens D erfolgt ein Prüfen P1, ob der Eingriff beendet wurde. Ist dies nicht der Fall, so wird zeitlich danach erneut geprüft, ob der Eingriff beendet ist.

Ist der Eingriff beendet, so erfolgt ein Prüfen P2, ob der durchgeführte Eingriff berechtigt war oder nicht. Dieses Prüfen P2 kann - wie vorhergehend erläutert - insbesondere in Abhängigkeit eines Verhaltens des Fahrzeugführers 1 (siehe Fig. 1) beim Durchführen D des Eingriffs und/oder in Abhängigkeit eines Fahrzeugverhaltens während der Durchführung D des Eingriffs bestimmt werden.

Wird bei diesem Prüfen P2 detektiert, dass der Eingriff berechtigt war oder als berechtigt vom Fahrzeugführer empfunden wurde, so erfolgt ein Prüfen P3, ob ein aufnahmefähigkeitsspezifisches Kriterium erfüllt ist. Hierzu kann zum Zeitpunkt dieses Prüfens P3 ein Maß für die Aufnahmefähigkeit des Fahrzeugführers 1 in Abhängigkeit einer Fahrzeuginformation und/oder einer aktuellen Fahrsituation bestimmt werden, was vorhergehend bereits erläutert wurde. Ist dies nicht der Fall, ist also der Fahrzeugführer 1 nicht oder nicht genügend aufnahmefähig, so erfolgt ein erneutes Prüfen P3, ob ein aufnahmefähigkeitsspezifisches Kriterium erfüllt ist, insbesondere nach einer vorbestimmten Zeitdauer. Wird jedoch ein ausreichendes Maß an Aufnahmefähigkeit des Fahrzeugführers 1 beim Prüfen P3 bestimmt, so erfolgt eine Ausgabe A1 von Informationen 9 über die Art des durchgeführten Eingriffs an den Fahrzeugführer, wobei zusätzlich zu diesen Informationen 9 über die Art keine weiteren Informationen oder keine weiteren eingriffsbezogenen Informationen ausgegeben werden.

Wird beim Prüfen P2 der Berechtigung detektiert, dass der Eingriff nicht berechtigt war oder als nicht berechtigt empfunden wurde, so erfolgt das erläuterte Prüfen P3, ob der Fahrzeugführer 1 ausreichend aufnahmefähig ist. Ist dies der Fall, so erfolgt eine Ausgabe A2 von Informationen über die Art des Eingriffs als auch von Informationen über die Funktionsweise des Eingriffs und über die Konfigurationsmöglichkeiten des Eingriffs sowie gegebenenfalls Informationen über einen Zugang zu einer eingriffsspezifischen Konfigurationsmöglichkeit.

### Bezugszeichenliste

- 1: Fahrzeugführer
- 2: erste Ausgabeeinrichtung
- 3: Steuer- und Auswerteeinrichtung
- 4: Geschwindigkeitssensor
- 5: weitere Steuer- und Auswerteeinrichtung
- 6: Motorsteuereinrichtung
- 7: weitere Ausgabeeinrichtung
- 8: Warnsymbol
- 9: ausgegebene Information
- 10: Eingabeeinrichtung
- D: Durchführen eines Eingriffs
- P1: Prüfen der Beendigung der Durchführung des Eingriffs
- P2: Prüfen der Berechtigung des Eingriffs
- P3: Prüfen der Aufnahmefähigkeit des Fahrzeugführers
- A1: Informationsausgabe
- A2: Informationsausgabe

## Patentansprüche

1. Verfahren zum Betreiben eines Fahrzeuginformationssystems (1), wobei detektiert wird, ob ein Eingriff eines Fahrerassistenzsystems eines Fahrzeugs vorliegt, wobei ein Maß für eine Aufnahmefähigkeit eines Fahrzeugführers (1) bestimmt wird,
**dadurch gekennzeichnet, dass**
zumindest eine Information über die Art des Eingriffs an den Fahrzeugführer (1) ausgegeben wird, falls der Eingriff abgeschlossen und das Maß für die Aufnahmefähigkeit ein aufnahmefähigkeitsspezifisches Kriterium erfüllt.

2. Verfahren nach Anspruch 1, **dadurch gekennzeichnet, dass** ein Maß für die Berechtigung des Eingriffs bestimmt wird, wobei die ausgegebene Information in Abhängigkeit des Maßes der Berechtigung bestimmt wird.

3. Verfahren nach Anspruch 2, **dadurch gekennzeichnet, dass** das Maß für die Berechtigung des Eingriffs in Abhängigkeit eines Verhaltens des Fahrzeugführers (1) bestimmt wird.

4. Verfahren nach Anspruch 3, **dadurch gekennzeichnet, dass** das Verhalten des Fahrzeugführers (1) in Abhängigkeit von Eingaben des Fahrzeugführers (1) bestimmt wird.

5. Verfahren nach einem der Ansprüche 2 bis 4, **dadurch gekennzeichnet, dass** alternativ oder kumulativ das Maß für die Berechtigung des Eingriffs in Abhängigkeit eines Verhaltens des Fahrzeugs bestimmt wird.

6. Verfahren nach einem der Ansprüche 2 bis 5, **dadurch gekennzeichnet, dass** Informationen über eine Funktionsweise des Eingriffs ausgegeben werden, falls der Eingriff als unberechtigt klassifiziert wurde.

7. Verfahren nach einem der Ansprüche 2 bis 6, **dadurch gekennzeichnet, dass** Informationen über eine Konfigurationsmöglichkeit des Eingriffs ausgegeben werden, falls der Eingriff als unberechtigt klassifiziert wurde.

8. Verfahren nach einem der Ansprüche 2 bis 7, **dadurch gekennzeichnet, dass** Informationen über einen Zugang zu einer eingriffsspezifischen Konfigurationsmöglichkeit ausgegeben wird, falls der Eingriff als unberechtigt klassifiziert wurde.

9. Fahrzeuginformationssystem, umfassend mindestens eine Einrichtung (2) zur Ausgabe von Informationen an einen Fahrzeugführer (1) und mindestens eine Steuer- und Auswerteeinrichtung (3), wobei mittels der Steuer- und Auswerteeinrichtung (3) detektiert wird, ob ein Eingriff eines Fahrerassistenzsystems eines Fahrzeugs vorliegt, wobei weiter ein Maß für eine Aufnahmefähigkeit eines Fahrzeugführers (1) bestimmt wird,
**dadurch gekennzeichnet, dass**
zumindest eine Information über die Art des Eingriffs an den Fahrzeugführer (1) durch die Einrichtung (2) zur Ausgabe von Informationen ausgegeben wird, falls der Eingriff abgeschlossen und das Maß für die Aufnahmefähigkeit ein aufnahmefähigkeitsspezifisches Kriterium erfüllt.

10. Fahrzeuginformationssystem nach Anspruch 9, **dadurch gekennzeichnet, dass** das Fahrzeuginformationssystem mindestens eine weitere Einrichtung (7) zur Ausgabe von Informationen umfasst, wobei die Information über die Art des Eingriffs an den Fahrzeugführer (1) zusätzlich auch durch die weitere Einrichtung (7) zur Ausgabe von Informationen ausgegeben wird.

## Claims

1. Method for operating a vehicle information system (1), wherein a detection is performed as to whether an intervention of a driver assistance system of a vehicle is present, wherein a measure of a takeover capability of a vehicle driver (1) is determined,
**characterized in that**
at least one item of information about the type of intervention is output to the vehicle driver (1) if the intervention is complete and the measure of the takeover capability meets a takeover capability-specific criterion.

2. Method according to Claim 1, **characterized in that** a measure of the authorization of the intervention is determined, wherein the output information is determined on the basis of the measure of the authorization.

3. Method according to Claim 2, **characterized in that** the measure of the authorization of the intervention is determined on the basis of a behaviour of the vehicle driver (1).

4. Method according to Claim 3, **characterized in that** the behaviour of the vehicle driver (1) is determined on the basis of inputs by the vehicle driver (1).

5. Method according to one of Claims 2 to 4, **characterized in that**, as an alternative or in addition, the measure of the authorization of the intervention is determined on the basis of a behaviour of the vehicle.

6. Method according to one of Claims 2 to 5, **characterized in that** information about an operating mode of the intervention is output if the intervention has been classified as unauthorized.

7. Method according to one of Claims 2 to 6, **characterized in that** information about a configuration option of the intervention is output if the intervention has been classified as unauthorized.

8. Method according to one of Claims 2 to 7, **characterized in that** information about access to an intervention-specific configuration option is output if the intervention has been classified as unauthorized.

9. Vehicle information system, comprising at least one device (2) for outputting information to a vehicle driver (1) and at least one control and evaluation device (3), wherein a detection is performed by way of the control and evaluation device (3) as to whether an intervention of a driver assistance system of a vehicle is present, wherein a measure of a takeover capability of a vehicle driver (1) is also determined,
**characterized in that**
at least one item of information about the type of intervention is output to the vehicle driver (1) by the device (2) for outputting information if the intervention is complete and the measure of the takeover capability meets a takeover capability-specific criterion.

10. Vehicle information system according to Claim 9, **characterized in that** the vehicle information system comprises at least one further device (7) for outputting information, wherein the information about the type of intervention is additionally also output to the vehicle driver (1) by the further device (7) for outputting information.

## Revendications

1. Procédé d'exploitation d'un système d'information de véhicule (1), dans lequel on détecte s'il existe une intervention d'un système d'assistance au conducteur d'un véhicule, une mesure de réceptivité d'un conducteur de véhicule (1) étant déterminée,
**caractérisé en ce qu'**au moins une information concernant le type de l'intervention est sortie à l'intention du conducteur de véhicule (1) si l'intervention est terminée et la mesure de la réceptivité remplit un critère spécifique à la réceptivité.

2. Procédé selon la revendication 1, **caractérisé en ce qu'**une mesure de la justification de l'intervention est déterminée, l'information sortie étant déterminée en fonction de la mesure de la justification.

3. Procédé selon la revendication 2, **caractérisé en ce que** la mesure de la justification de l'intervention est déterminée en fonction d'un comportement du conducteur de véhicule (1).

4. Procédé selon la revendication 3, **caractérisé en ce que** le comportement du conducteur de véhicule (1) est déterminé en fonction d'entrées du conducteur de véhicule (1).

5. Procédé selon l'une quelconque des revendications 2 à 4, **caractérisé en ce que** de manière alternative ou cumulée, la mesure de la justification de l'intervention est déterminée en fonction d'un comportement du véhicule.

6. Procédé selon l'une quelconque des revendications 2 à 5, **caractérisé en ce que** des informations concernant un fonctionnement de l'intervention sont sorties si l'intervention a été classifiée comme injustifiée.

7. Procédé selon l'une quelconque des revendications 2 à 6, **caractérisé en ce que** des informations concernant une option de configuration de l'intervention sont sorties si l'intervention a été classifiée comme injustifiée.

8. Procédé selon l'une quelconque des revendications 2 à 7, **caractérisé en ce que** des informations concernant un accès à une option de configuration spécifique à l'intervention sont sorties si l'intervention a été classifiée comme injustifiée.

9. Système d'information de véhicule, comprenant au moins un dispositif (2) de sortie d'informations à l'intention d'un conducteur de véhicule (1) et au moins un dispositif de commande et d'évaluation (3), le dispositif de commande et d'évaluation (3) permettant de détecter s'il existe une intervention d'un système d'assistance au conducteur d'un véhicule, dans lequel en outre une mesure d'une réceptivité d'un conducteur de véhicule (1) est déterminée,
**caractérisé en ce qu'**au moins une information concernant le type de l'intervention est sortie à l'intension du conducteur de véhicule (1) par le dispositif (2) de sortie d'informations si l'intervention est terminée et la mesure de la réceptivité remplit un critère spécifique à la réceptivité.

10. Système d'information de véhicule selon la revendication 9, **caractérisé en ce que** le système d'information de véhicule comprend au moins un autre dispositif (7) de sortie d'informations, les informations concernant le type de l'intervention étant en plus sorties à l'intention du conducteur de véhicule (1) également par l'autre dispositif (7) de sortie d'informations.
